# EUROPÄISCHE PATENTSCHRIFT

(11) **EP 1 578 560 B1**
(45) Veröffentlichungstag und Bekanntmachung des Hinweises auf die Patenterteilung: **14.05.2008**
(21) Anmeldenummer: 03785774.5
(22) Anmeldetag: 09.12.2003
(51) Int. Cl.: B23Q 1/00, B23Q 9/00, B23Q 1/01

(54) **SONDERMASCHINE ZUM BEARBEITEN VON KRAFTFAHRZEUG-AUSSENTEILEN**
SPECIAL-PURPOSE EQUIPMENT FOR PREPARING EXTERIOR COMPONENTS OF MOTOR VEHICLES
MACHINE SPECIALE SERVANT A USINER DES PIECES EXTERIEURES DE VEHICULE AUTOMOBILE

(30) Priorität: 24.12.2002 DE 10261012
(43) Veröffentlichungstag der Anmeldung: 28.09.2005
(73) Patentinhaber: Plastal GmbH, 91781 Weissenburg (DE)
(72) Erfinder: ALBERT, Bruno, 90763 Fuerth (DE)
(74) Vertreter: Scherzberg, Andreas Hans
(86) Internationale Anmeldenummer: PCT/EP2003/013912
(87) Internationale Veröffentlichungsnummer: WO 2004/058447

(56) Entgegenhaltungen:
- DE-C- 184 937
- FR-A- 1 458 341
- FR-A- 2 702 982
- US-A- 5 836 068
- PATENT ABSTRACTS OF JAPAN vol. 013, no. 274 (M-841), 23. Juni 1989 (1989-06-23) & JP 01 071637 A (HITACHI SEIKO LTD), 16. März 1989 (1989-03-16)

## Beschreibung

Die Erfindung betrifft eine Sondermaschine zum Bearbeiten von Kraftfahrzeug-Außenteilen mit einem Trägerrahmen an dem über Trägerplatten eine funktionale Einheit zum Bearbeiten der Außenteile befestigt ist.

Bei einer Sondermaschine nach dem Stand der Technik zum Bearbeiten von Kraftfahrzeug-Außenteilen wird die funktionale Einheit an einem Trägerrahmen über Trägerplatten starr befestigt. Die funktionale Einheit ist z. B. eine Stanz-, Präge- oder Schweißanlage. Ein Kraftfahrzeug-Außenteil ist z. B. ein Stoßfänger.

Durch die großen Außenabmessungen der Kraftfahrzeug-Außenteile ergeben sich große Abmessungen dieser Sondermaschinen, z. B. 4 x 3 x 2 m.

Aus Kostengründen kann jeder Trägerrahmen nur eine begrenzte Steifigkeit aufweisen, so dass beim Transport oder bei der Verlagerung der Sondermaschine an einen neuen Standort mit geänderter Bodenbeschaffenheit auf Grund der Bodenunebenheit eine Verformung oder ein Verwinden des Trägerrahmens eintritt. Diese Verformung oder Verwindung überträgt sich über den Trägerrahmen auch auf die Trägerplatten und damit auf die funktionale Einheit der Sondermaschine.

Im Falle einer Stanzanlage mit aufeinander exakt abgestimmten Stanzstempel und Schnittplatte würde diese Verformung oder Verwindung zu einer Kollision des Stanzstempels mit der Schnittplatte führen, welches einen Ausfall der Sondermaschine zur Folge hätte.

Um die sichere Produktion bzw. Inbetriebsetzung einer verlagerten Sondermaschine zu gewährleisten, ist es nach dem Stand der Technik bekannt, die Sondermaschine am neuen Standort zunächst zu positionieren und mit Hilfe von Dosenlibellen (Wasserwaagen) auszurichten bzw. die funktionale Einheit neu zu kalibrieren.

Dieser Vorgang ist mit erheblichem Zeit- und Kostenaufwand verbunden und fällt prinzipiell bei jeder Verlagerung der Sondermaschine an.

Der Erfindung liegt die Aufgabe zu Grunde, eine Sondermaschine nach dem Oberbegriff des Anspruchs 1 so zu verändern, dass nach einer Verlagerung der Sondermaschine der Rüstaufwand (Positionierung, Ausrichten, Abstimmen, Justieren) stark reduziert ist.

Erfindungsgemäß wird diese Aufgabe mittels einer Maschine gemäß Anspruch 1 gelöst.

Der Trägerrahmen der Sondermaschine wird also nicht, wie nach dem Stand der Technik bekannt, mit der funktionalen Einheit fest verschraubt oder verschweißt, d. h. starr verbunden, sondern als kompakte Gesamteinheit gebaut und mit der funktionalen Einheit über Trägerplatten verbunden, wobei diese Trägerplatten über eine schwimmende Lagerung am Trägerrahmen befestigt sind.

Als schwimmende Lagerung wird hier ein Federpufferelement mit räumlichen Toleranzausgleich verstanden. Dadurch wird erreicht, dass Verformungen bzw. Verdrehungen oder Verwindungen durch den Transport der Sondermaschine oder aber auf Grund von Unebenheiten im Boden von der schwimmenden Lagerung aufgefangen werden und nicht an die Trägerplatten bzw. die funktionale Einheit übertragen werden.

In bevorzugter Ausführungsform ist die schwimmende Lagerung eine Gummilagerung.

Mit diesen Maßnahmen wird der sofortige Einsatz der Sondermaschine mit deutlich reduziertem Rüstaufwand (Positionierung, Ausrichten, Abstimmen, Justieren) erreicht. Bei z. B. einer Stanzanlage als funktionaler Einheit ist eine Kollisionsgefahr im Bereich Stanzstempel/Schnittplatte stark verringert.

Weitere Merkmale der Erfindung ergeben sich aus den Figuren, die nachfolgend beschrieben sind. Es zeigt:
- Fig. 1: eine Sondermaschine mit einem Trägerrahmen und Trägerplatten ohne angebaute funktionale Einheit,
- Fig. 2: die Sondermaschine gemäß Fig. 1 in Explosionsdarstellung und
- Fig. 3: eine schwimmende Lagerung der Trägerplatten auf dem Trägerrahmen.

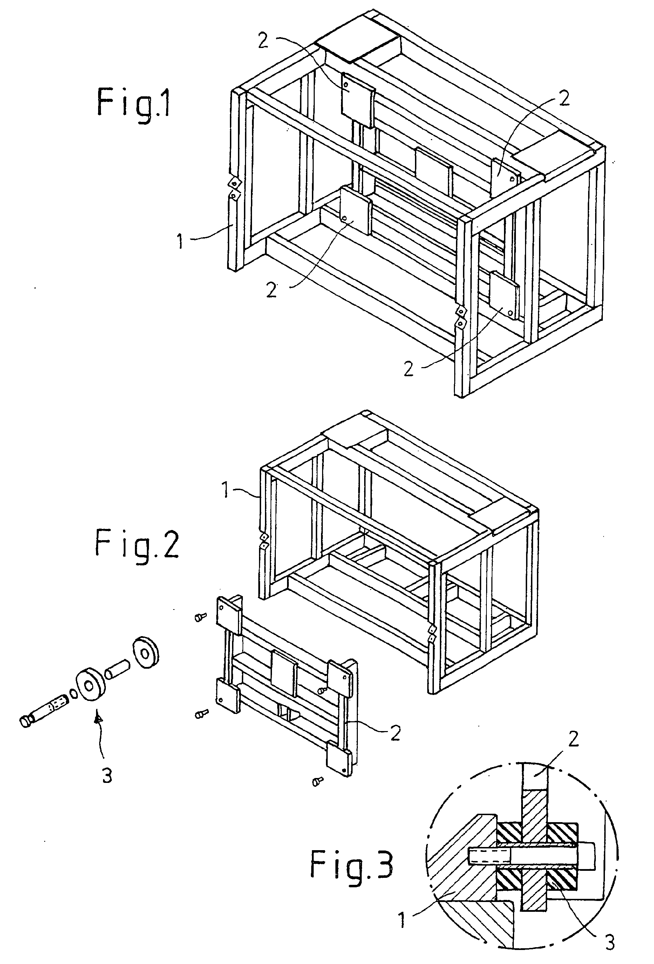

Fig. 1 zeigt eine Sondermaschine mit einem quaderförmigen Trägerrahmen 1. In diesem Trägerrahmen 1 sind Trägerplatten 2 in vertikaler Richtung eingebaut. An diese Trägerplatten 2 wird eine funktionale Einheit, d.h. eine Stanz-, Präge- oder Schweißanlage angebaut. Die funktionale Einheit ist in den Figuren nicht gezeigt.

Erfindungsgemäß sind die Trägerplatten 2 über eine schwimmende Lagerung im Trägerrahmen 1 befestigt.

Fig. 2 zeigt die Sondermaschine gemäß Fig. 1, jedoch in Explosionsdarstellung. Gut zu erkennen ist die vertikale Anordnung der Trägerplatten 2, die über schwimmende Lagerungen 3 am Trägerrahmen 1 befestigt sind.

Fig. 3 zeigt eine schwimmende Lagerung 3 im vergrößerten Maßstab. Diese schwimmende Lagerung 3 ist in dieser Ausführungsform eine Gummilagerung und hat die Aufgabe, Verformungen, Verdrehungen oder Verwindungen durch einen Transport oder aber Unebenheiten des Bodens auf dem die Sondermaschine aufgestellt ist, auszugleichen und nicht an die Trägerplatten 2 zu übertragen, so dass die auf den Trägerplatten 2 befestigte funktionale Einheit von dem Trägerrahmen 1 entkoppelt ist und nach einem Transport nicht langwierig neu justiert und/oder kalibriert werden muss.

Die schwimmende Lagerung 3 dient hier als Federpufferelement mit räumlichem Toleranzausgleich.

## Patentansprüche

1. Sondermaschine zum Bearbeiten von Kraftfahrzeug-Außenteilen mit einem Trägerrahmen (1) an dem über Trägerplatten (2) eine funktionale Einheit zum Bearbeiten der Außenteile befestigt ist, wobei die funktionale Einheit eine Stanz-, Präge- oder Schweißanlage ist, **dadurch gekennzeichnet,**
- **dass** die Trägerplatten (2) in vertikaler Richtung am Trägerrahmen (1) befestigt sind und
- **dass** die Trägerplatten (2) über eine schwimmende Lagerung (3) am Trägerrahmen (1) befestigt sind.

2. Sondermaschine nach Anspruch 1, **dadurch gekennzeichnet, dass** die schwimmende Lagerung (3) eine Gummilagerung ist.

## Claims

1. A special-purpose machine for processing motor-vehicle exterior parts with a supporting frame (1) to which a functional unit for processing the exterior parts is secured by way of supporting plates (2), wherein the functional unit is a punching, stamping or welding system, **characterised**
- **in that** the supporting plates (2) are secured to the supporting frame (1) in a vertical direction; and
- **in that** the supporting plates (2) are secured to the supporting frame (1) by way of a floating bearing (3).

2. A special-purpose machine according to claim 1, **characterised in that** the floating bearing (3) is a rubber bearing.

## Revendications

1. Machine spéciale pour l'usinage de pièces extérieures de véhicules automobiles comportant un bâti-support (1) sur lequel une unité fonctionnelle pour l'usinage des pièces extérieures est fixée par l'intermédiaire de plateaux-supports (2), l'unité fonctionnelle étant une installation d'estampage, de poiçonnage ou de soudure, **caractérisée en ce**
• **que** les plateaux-supports (2) sont fixés verticalement au bâti-support (1) et
• **que** les plateaux-supports (2) sont fixés au bâti-support (1) par l'intermédiaire d'une liaison flottante (3).

2. Machine spéciale selon la revendication 1, **caractérisée en ce que** la liaison flottante (3) est une suspension élastique à plots de caoutchouc.
